# EUROPEAN PATENT APPLICATION

(11) **EP 4 521 465 A1**
(43) Date of publication of application: **12.03.2025**
(21) Application number: 23215333.8
(22) Date of filing: 08.12.2023
(51) Int. Cl.: H01L 27/02

(54) **SEMICONDUCTOR DEVICE AND METHOD OF FABRICATING AND DESIGNING**

(30) Priority: 08.09.2023 IN 202311060509
(71) Applicant: NXP B.V., 5656 AG Eindhoven (NL)
(72) Inventor: NAIR, Lakshmi, 5656AG Eindhoven (NL); GAYAKWAD, Pramod, 5656AG Eindhoven (NL); DHARMAVARAM, Ramanath, 5656AG Eindhoven (NL); FÜRST, Sandor, 5656AG Eindhoven (NL)
(74) Representative: Hardingham, Christopher Mark

(57) **Abstract**

A semiconductor device includes at least a first cell and a second cell. Each of the first and second cells includes: a first well of a first conductivity type; a second well in the first well, wherein the second well has a second conductivity type opposite the first conductivity type; and a discharge pin connected to the second well. The semiconductor device further includes a discharge path connected between the discharge pins of the first and second cells, such that the second wells of the first and second cells are on a same electric potential. A method of fabricating the semiconductor, and a method of designing the semiconductor device are also described.

## Description

### BACKGROUND

This disclosure relates to a standard cell with deep N-well, and methods for fabricating and designing a semiconductor device.

Modern fabrication of integrated circuits typically use deep micron process technologies in which High Density Plasma Enhanced Chemical Vapor Deposition (HDPECVD) and plasma etching are used to form the transistor structures. Electric charges from the plasma processes can accumulate on exposed conductive structures that can be conducted to the gate region of the transistors and thereby cause gate leakage and impact the threshold voltage, V_{T}, of the transistor. Plasma Induced Damage (PID), or Process Antenna Effect (PAE), happens when the accumulated charges grow significantly, and could break the gate oxide layer which is designed to be thinner and thinner in advanced deep submicron processes.

### SUMMARY

This summary is provided to introduce a selection of concepts in a simplified form that are further described below in the Detailed Description. This summary is not intended to identify key or essential features of the claimed subject matter, nor is it intended to be used to limit the scope of the claimed subject matter.

In one embodiment, a semiconductor device includes at least a first cell and a second cell. Each of the first and second cells includes: a first well of a first conductivity type; a second well in the first well, wherein the second well has a second conductivity type opposite the first conductivity type; and a discharge pin connected to the second well. The semiconductor device further includes a discharge path connected between the discharge pins of the first and second cells, such that the second wells of the first and second cells are on a same electric potential.

In another embodiment, a method of fabricating a semiconductor device includes fabricating at least a first cell and a second cell. The method includes fabricating each of the first and second cells by: forming a first well of a first conductivity type; forming a second well in the first well, the second well has a second conductivity type opposite the first conductivity type; forming a discharge pin on the second well; and forming a discharge path which connects the discharge pins of the first and second cells, such that the second wells of the first and second cells are on a same electric potential.
In yet another embodiment, a method of designing a semiconductor device includes: placing a first cell and a second cell each having a first well of a first conductivity type and a second well in the first well, the second well has a second conductivity type opposite the first conductivity type; configuring a discharge pin on the second well; and routing the discharge pin of the first cell to the discharge pin of the second cell through a discharge path. The first cell and the second cell may each be a standard cell and/or a tap-less cell with deep N-well; the method may further comprise configuring a bias node on the second well of each of the first and second cells; and routing the bias nodes to a bias conductive path, such that the second well is connectable to a bias voltage level through the bias conductive path. It may further comprise configuring the discharge path in a first metal layer, and configuring a signal path which connects between the first cell and the second cell in a second metal layer different from the first metal layer. It may further comprise configuring the second metal layer to be higher than the first metal layer. The first cell may be a standard cell with deep N-well and comprises at least a transistor, and the method may further comprise configuring the discharge path in a metal layer lower than metal layers in that electrodes of the transistors are routed.

### BRIEF DESCRIPTION OF THE DRAWINGS

So that the manner in which the above recited features of the present disclosure can be understood in detail, a more detailed description of the disclosure may be had by reference to embodiments, some of which are illustrated in the appended drawings. The appended drawings illustrate only typical embodiments of the disclosure and should not limit the scope of the disclosure, as the disclosure may have other equally effective embodiments. The drawings are for facilitating an understanding of the disclosure and thus are not necessarily drawn to scale. Advantages of the subject matter claimed will become apparent to those skilled in the art upon reading this description in conjunction with the accompanying drawings, in which like reference numerals have been used to designate like elements, and in which:
FIG. 1 is a diagram of an NMOS transistor of a standard cell in a deep N-well;
FIG. 2 is a diagram illustrating two isolated deep N-wells with NMOS transistors according to an embodiment;
FIG. 3 is a flow diagram of a method of fabricating a semiconductor device according to an embodiment;
FIG. 4 is a simplified schematic view of a cell in a CAD environment;
FIG. 5 is a flow diagram of a method of designing a semiconductor device according to an embodiment; and
FIG. 6 is a diagram of an NMOS transistor of a standard cell of FIG. 2 and illustrating an LVS resistor inserted.

### DETAILED DESCRIPTION

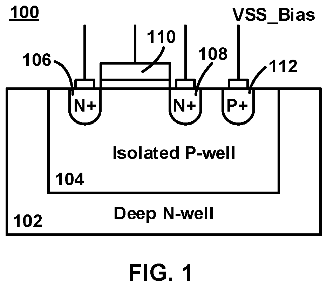

In designing integrated circuits, so called "standard cells" are placed and routed. Most standard cells include one or more transistors that are integrated to perform a specific function. FIG. 1 illustrates an example NMOS transistor of a standard cell. The NMOS transistor 100 of the standard cell is formed in a first well 102 which is a deep N-well, and within which is a second well region 104. The second well region 104 is an isolated P-well region. One or more transistors of the standard cell are configured within the isolated P-well region 104, while FIG. 1 shows only one NMOS transistor which has a source electrode and a drain electrode respectively connected to N+ regions 106 and 108. Gate electrode 110 of the NMOS transistor is located between the N+ regions 106 and 108.

As the NMOS transistor 100 is fabricated in the deep N-well 102, when a PN junction between the isolated P-well region 104 and the deep N-well 102 is forward biased, a latch-up effect can occur, which can destroy the circuit in a very short time. To avoid such damage due to the latch-up effect, the PN junction needs to be reverse biased by connecting the deep N-well 102 to a high voltage level, such as a supply voltage VDD, and connecting the isolated P-well region 104 to a lower voltage level, such as a bias voltage level VSS_Bias. A P+ region 112 is formed in the isolated P-well region 104, to provide the connection to the bias voltage level VSS_Bias. The deep N-well 102 and isolated P-well region 104 provides good isolation of the transistors in one cell from other cells in the circuit in other isolated regions, and is advantageous in its performance. P+ in this context depicts that the doping density of the P+ region 112 is higher than the doping density of the isolated P-well region 104.

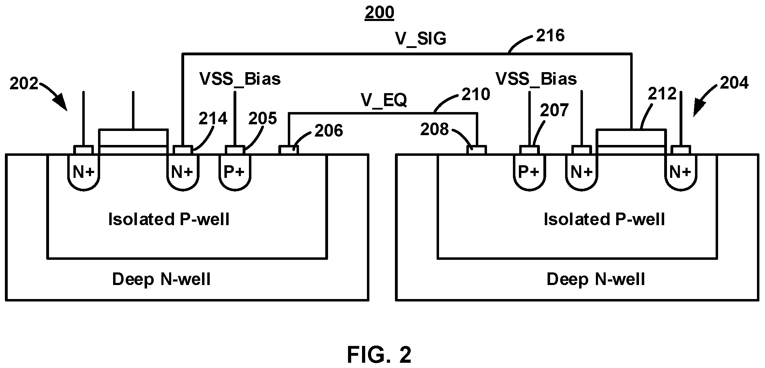

FIG. 2 illustrates a first cell and a second cell of a semiconductor device according to an embodiment. The semiconductor device 200 includes a first cell 202 and a second cell 204 that are similar to the standard cell of FIG. 1. Additionally, the first cell 202 has a discharge pin 206, and the second cell 204 has a discharge pin 208. The discharge pins 206 and 208 are arranged on the isolated P-well regions of the cells 202 and 204. In the cells 202 and 204, P+ regions 205 and 207 are respectively fabricated in the respective isolated P-well region, which is similar to that of FIG. 1, for providing the connections to the bias voltage level VSS_Bias.

Electric charge, accumulated in the isolated P-well regions during the fabrication of the semiconductor device, may cause imbalance to the electric potentials between the isolated domains of the cells. When a device which is formed in one isolated cell drives a device which is formed in the other isolated cell (e.g. shown through V_SIG connection in FIG.2), it may lead to PID in, for example, gate 212 of the cell 204 which is being driven, thus causing a low yield wafer. To prevent PID from happening, the discharge pins 206 and 208, according to the embodiment, are connected to each other through a discharge path 210, represented as V_EQ. The discharge path 210 may be connected for realizing an equalization voltage level. The isolated P-well regions of the cells 202 and 204 are on a same electric potential resulting from the discharge path 210 connected to the discharge pins 206 and 208. The electrodes of the transistor of a cell are connected to an external cell through metal traces, which results in conductive layer pattern manufacturing on the semiconductor wafer materials. The discharge path 210, between the discharge pins 206 and 208, is arranged on a metal layer, which is different from the metal layer arrangement of a signal path 216, as represented by, for example, the V_SIG connection which is for providing the connection between the gates 212 and 214. Metal layers of the semiconductor device are "stacked" with one layer deposited over another, with dielectric therebetween, during fabrication of the semiconductor integrated circuit. In terms of the metal layer stack, the metal layer, used for configuring the discharge path 210 between the isolated P-well regions, is below or on a same metal layer as that of the signal path 216 represented by V_SIG. The skilled person will appreciate, that as used herein, the term "discharge path" generally refers to a path between two or more of the isolated P-well regions, and acts to distribute charge between the P-wells, and thereby discharge charge from one (or more) of the P-well regions; there is no requirement that charge be discharged to any external device. In other words, the discharge path may alternatively be described as a "charge sharing path". The discharge pin of the cell of FIG. 2 is preferably arranged on a peripheral region of the cell.

The cells described in FIG. 1 and FIG. 2 take the example of NMOS transistors configured in deep N-wells. However, in a typical CMOS circuit, cells may include PMOS transistors, and the cell configurations of the above described embodiments are also applicable. Deep N-well may contain more than one NMOS transistors.

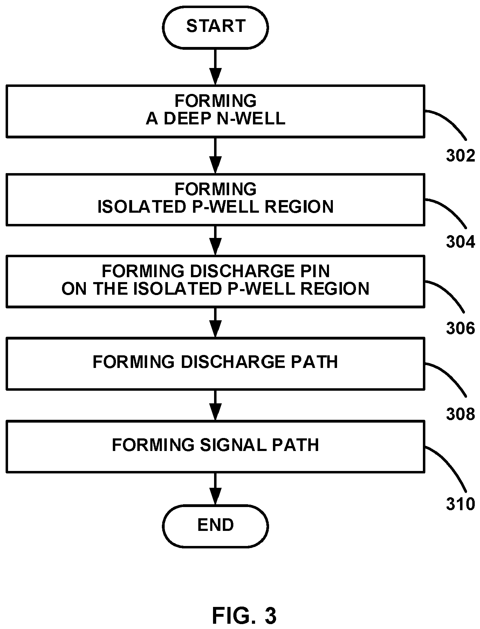

FIG. 3 is a flow diagram of fabricating a semiconductor device according to an embodiment. Only those steps relevant to, and useful for understanding, the present disclosure are shown and described, although the skilled person will appreciated that the fabrication of a semiconductor device typically include many, even hundreds, of additional steps. The method will now be described taking the example semiconductor device of FIG. 2. Step 302 of the method forms the deep N-well on a substrate, for example by ion implantation of N-type dopants to a depth of around 100nm. N-type dopants include phosphorus or arsenic ions. Step 304 follows to fabricate the isolated P-well region in the deep N-well, for example by implanting P-type dopants into the deep N-well. P-type dopants include boron or indium ions.

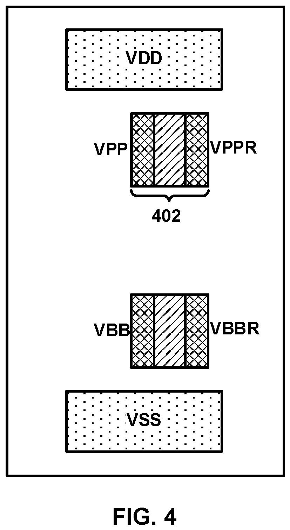

Step 306 of the method is implemented to form contacts on the isolated P-well region. The contacts fabricated on the isolated P-well region will include a bias node (205 or 207 as in FIG. 2) for being connected in a bias conductive path, and the discharge pins (206 or 208 as in FIG. 2) for being connected in a discharging path. With reference to FIG. 4 which is a simplified schematic view of a standard cell design, a contact 402 is formed to include both the bias node VPP and the discharge pin VPPR. With reference also to FIG. 2, the contact 402 can be fabricated by forming a P+ region (beneath the bias node 205 or 207) in a surface of the isolated P-well region first, and then a metal area 402 over the P+ region. The metal area 402 includes the bias node (205 and 207) and the discharge pins (206 or 208), one side area of the metal area 402 acts as the bias node, and the other side area of the metal area acts as the discharge pin. The discharge pins thus formed will be connected to a metal layer for providing the discharging path. The P+ region of the contact has an increased doping density, relative to the remainder of the P-well, which increases conductivity. The method further includes step 308 to form a discharge path (210 as in FIG. 2) to connect the discharge pins of the cells, such that the isolated P-well regions of the cells are on a same electric potential. The step 308 of connecting to the discharge path may include forming the discharge path in a metal layer and connecting, for example by means of vias through underlying metal and dielectric layers in the metal stack, the discharge pins to the metal layer.

If the fabricated cell is a standard cell having the respective transistors in the isolated P-well region and thereby having input/output signal pins for the transistors, a step 310 follows to connect the pins/electrodes of transistors in the cell to respective interconnection layers. For example, the signal path 216 represented as V_SIG in FIG. 2 can be fabricated through the interconnection layer. The interconnection layers are metal layers above the metal layer for configuring the discharge path of step 308.

Alternatively, the cell can also be created in a design using tap-less standard library in which the cells does not provide signal input/output pins. The cell according to the embodiments with the discharge pins 206 and 208 can replace respective existing cells. It shall be understood that the discharge path between the discharge pins formed in step 308 is formed in a metal layer stack, while the signal path formed in step 310 is formed in a separate metal layer. As described above, to avoid the PID effect, the discharge path is preferably established before the signal path, which means the metal layer for forming the discharge path is lower than the metal layer for forming the signal path.

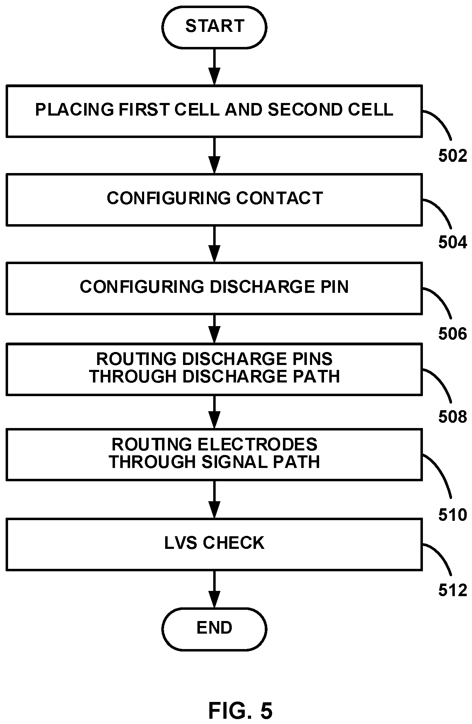

FIG. 5 is a flow diagram of a method for designing a semiconductor device. The method will also be described taking example of the device of FIG. 2 and FIG. 4. Designing a semiconductor device from standard cells mainly involves place and routing, including placing the cells and routing the connection contacts of the cells in different interconnection layers.

Step 502 of the method is implemented to place a first cell and a second cell. As described above, the first cell and the second cell have respective deep N-well configuration, and also have respective isolated P-well region. Step 504 configures each of the first cell and the second cell with a contact (402 of FIG. 4) on respective isolated P-well region. Step 506 of the method configures a discharge pin on the P+ contact on the isolated P-well region of each of the first and second cells.

Step 508 follows to route the discharge pin of the cells to be connected together through a discharge path. Similar to the step 310 of FIG. 3, step 510 routes the electrodes of the transistors of the cell to respective interconnection layers, and/or routes the bias nodes (205 or 207 in FIG. 2) to a bias conductive path. Specifically, as an example this may include, routing the drain electrode 214 of the device 202 with the gate electrode 212 of the other device 204 to a metal layer Metal-m, and routing the discharge path 210 connecting the discharge pins 206 and 208 to a metal layer Metal-n. In one or more embodiments, if Metal-n is either M1-M2 (i.e. first- or second-Metal layer), Metal-m is configured as M2 or above M2; if Metal-n is within a range of M1-M5, Metal-m is configured as M5 or above M5, such that the interconnection layers are placed in a metal layer higher than that of the metal layer in which the discharge path is configured. As described above, the discharge path is established in lower metal layers than the signal paths to prevent the PID effect.

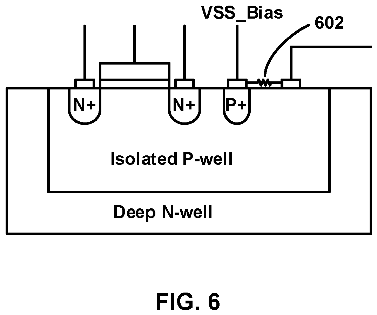

At step 512 a Layout v.s. Schematic (LVS) check of the designed semiconductor device is performed. FIG. 6 illustrates an LVS resistor between the discharge pin and the bias node of the semiconductor device of FIG. 2. As described above, and also can be seen from the layout diagram of FIG. 2 and FIG. 4, because the discharge pin and the bias node are both configured from the metal area 402 on the P+ contact in the isolated P-well region, design tools generally do not allow the discharge pin and the bias node from a same metal area to be routed to different metal layers. The LVS resistor 602 illustrated is not a physical component, but rather it depicts a resistance between the discharge pin and the bias node, seen from a schematical perspective, to be compliant with rules of the design tools. The LVS resistor 602 may be included in the LVS check to examine whether the designed layout is consistent with an electrical execution. In a typical embodiment, the LVS resistor 602 has a resistance of around 300 milli-ohms. However the resistance of the LVS resistor is configurable in accordance with the process for fabricating and other applicable factors, and may vary from NMOS transistors to PMOS transistors.

The embodiments design and configure the cell with an additional discharge pin which results from expanding the existing pin for configuring the bias path, to prevent PID effect. The cell of the embodiments is suitable to replace existing standard cells, and is area efficient.

The use of the terms "a" and "an" and "the" and similar referents in the context of describing the subject matter (particularly in the context of the following claims) are to be construed to cover both the singular and the plural, unless otherwise indicated herein or clearly contradicted by context. The terms "coupled" and "connected" both mean that there is an electrical connection between the elements being coupled or connected, and neither implies that there are no intervening elements. In describing transistors and connections thereto, the terms gate, drain and source are used interchangeably with the terms "gate terminal", "drain terminal" and "source terminal". Recitation of ranges of values herein are intended merely to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims set forth hereinafter together with any equivalents thereof entitled to. The use of any and all examples, or exemplary language (*e.g*., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A semiconductor device comprising at least a first cell and a second cell, each of the first and second cells comprising:
a first well of a first conductivity type;
a second well in the first well, wherein the second well has a second conductivity type opposite the first conductivity type; and
a discharge pin connected to the second well; wherein
the semiconductor device further comprises a discharge path connected between the discharge pins of the first and second cells, such that the second wells of the first and second cells are on a same electric potential.

2. The semiconductor device of claim 1, wherein the first well is a deep N-well, and the second well is an isolated P-well region arranged within the deep N-well.

3. The semiconductor device of claim 2, wherein the first cell further comprises a bias node configured to connect to a bias voltage level through a bias conductive path, and to connect to the second well.

4. The semiconductor device of claim 3, wherein the discharge pin and the bias node are connected to the second well through a contact region of the second conductivity type, and wherein the contact region has a higher doping density than that of the second well.

5. The semiconductor device of claim 3 or 4, wherein a signal path connecting between the cells and the discharge path are different paths arranged in different metal layers of the semiconductor device.

6. The semiconductor device of any of claims 3 to 5, wherein the discharge path is arranged in a layer between the first well and a layer in which a signal path connecting between the cells is arranged.

7. The semiconductor device of any preceding claim, wherein the first cell further comprises at least a transistor arranged in the second well.

8. A method of fabricating a semiconductor device comprising fabricating at least a first cell and a second cell, wherein the method comprises fabricating each of the first and second cells by:
forming a first well of a first conductivity type;
forming a second well in the first well, the second well has a second conductivity type opposite the first conductivity type;
forming a discharge pin on the second well; and
forming a discharge path which connects the discharge pins of the first and second cells, such that the second wells of the first and second cells are on a same electric potential.

9. The method of claim 8, wherein the first well is a deep N-well, and the second well is an isolated P-well region within the deep N-well.

10. The method of claim 9, further comprising forming a bias node on the second well, and connecting the bias node to a bias conductive path, such that the second well is connectable to a bias voltage level through the bias conductive path.

11. The method of claim 10, wherein forming the discharge pin and the bias node on the second well comprises forming a contact region of the second conductivity type in the second well, the contact region has a higher density than that of the second well.

12. The method of claim 10 or 11, wherein forming the discharge path comprises forming the discharge path in a first metal layer, and the method further comprises forming a signal path which connects between the cells in a second metal layer different from the first metal layer.

13. The method of claim 12, wherein first metal layer is between the second metal layer and the first well.

14. The method of any of claims 8 to 13, further comprising fabricating at least a transistor in the second well.
